Europäisches Patentamt

European Patent Office

Office européen des brevets

(19)

(11) **EP 1 300 901 A2**

(12) **EUROPÄISCHE PATENTANMELDUNG**

(43) Veröffentlichungstag:
**09.04.2003 Patentblatt 2003/15**

(51) Int Cl.7: **H01M 8/10**, H01M 8/02

(21) Anmeldenummer: 02018749.8

(22) Anmeldetag: **22.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **06.10.2001 DE 10149508**

(71) Anmelder: **Behr GmbH & Co.**
**70469 Stuttgart (DE)**

(72) Erfinder:
• **Grzesik, Martin**
**70569 Stuttgart (DE)**

• **Kaiser, Wolfram**
**9848 Bonndorf (DE)**

(74) Vertreter: **Grauel, Andreas, Dr.**
**BEHR GmbH & Co., Intellectual Property,**
**Mauserstrasse 3**
**70469 Stuttgart (DE)**

Bemerkungen:
Die Bezugnahmen auf die Abbildungen 4 und 5 gelten als gestrichen (Regel 43 EPÜ).

(54) **Brennstoffzelle, insbesondere Polymerelektrolyt- oder Direktmethanol-Brennstoffzelle**

(57) 2. Die Erfindung betrifft eine Brennstoffzelle, insbesondere Polymerelektrolyt- oder Direktmethanol-Brennstoffzelle, mit anodenseitig und/oder kathodenseitig mindestens je einer Gasdiffusions-Elektrode mit einer Elektrodendiffusionszone und mindestens je einer stromabnehmenden Komponente, wobei der elektrische Widerstand der mikroskopischen Kontaktfläche (24) zwischen der Elektrodendiffusionszone (21) und der Oberfläche (22) der stromabnehmenden Komponente durch Vergrößerung der Kontaktfläche (24) infolge einer plastischen Verformung verringert ist.

Fig. 2

EP 1 300 901 A2

**Beschreibung**

Die Erfindung betrifft eine Brennstoffzelle, insbesondere eine Polymerelektrolyt- oder Direktmethanol-Brennstoffzelle, gemäß dem Oberbegriff des Anspruches 1 sowie ein Verfahren zur Herstellung einer entsprechenden Brennstoffzelle.

Eine Polymerelektrolyt-Brennstoffzelle ist eine elektrochemische Zelle, in der wasserstoffhaltiges Gas der Anode als Brennstoff zugeführt wird und sauerstoffhaltiges Gas, beispielsweise Luft, der Kathode als Oxidationsmittel zugeführt wird, so dass durch eine lokal nach Oxidation und Reduktion getrennte, elektrochemische Reaktion zwischen Wasserstoff und Sauerstoff elektrische Energie über einen äußeren Leiterkreis und einen Verbraucher genutzt werden kann. An der Anode wird Wasserstoff dissoziiert und oxidiert nach:

$$H2 \rightarrow 2H+ + 2e-$$

Die dabei frei werdenden Elektronen werden über den äußeren Leiterkreis und den Verbraucher zur Kathode geleitet. Die Protonen des Wasserstoffs können durch die Polymerelektrolytmembran transportiert werden. An der Kathode wird Wasserstoff und Sauerstoff mit den Elektronen zu Wasser kombiniert:

$$2 H+ + 2e- + ½ O2 \rightarrow H2O$$

Die bei diesem Prozess frei werdende Reaktionsenthalpie schlägt sich in Form einer elektrischen Spannung nieder und kann direkt von einem elektrischen Verbraucher, der im (Elektronen-)Leiterkreis zwischen Anode und Kathode angeordnet ist, genutzt werden.

Anode und Kathode der Brennstoffzelle sind gewöhnlich als Gasdiffusions-Elektroden ausgebildet oder in Diffusionszonen integriert. Die Anode ist mit einer Oberfläche einer Elektrolyt-Membran verbunden, während die Kathode mit der anderen Oberfläche der Elektrolyt-Membran verbunden ist, so dass eine Gasdiffusions-Elektrode/Elektrolyt-Membran-Anordnung entsteht, die in Fachkreisen unter der Abkürzung MEA - Membrane Electrode Assembly bekannt ist. Eine Gasdiffusions-Elektrode besteht aus einer Gasdiffusionsschicht und einer Katalysatorschicht. Die Katalysatorschichten sowohl der Anode als auch der Kathode sind meist mit katalytisch wirkenden Metallteilchen, insbesondere Platinteilchen, die auf Kohlenstoff-Teilchen geträgert sind, versehen.

Für die Gasdiffusionsschicht wird meist poröses Kohlefaserpapier oder ein Kohlefaserfilz verwendet. Ein Beispiel für einen solchen Aufbau wird in der DE 100 01 170 A1 beschrieben. Eine einzelne Brennstoffzelle besteht aus einer MEA, die zwischen zwei, mit Fluidverteilerstrukturen versehenen, elektrisch leitfähigen Bipolarplatten angeordnet ist.

Diese Bipolarplatten dienen dabei sowohl der Zu- und Abführung der Reaktionsedukte und Reaktionsprodukte zu und von der Reaktionszone an den Elektroden, als auch zur elektrischen Kontaktierung und Ableitung des elektrischen Stroms zwischen Anode und Kathode zum Verbraucher über den äußeren Leiterkreis. Zur Erzielung ausreichender Gasdichtigkeit von den Gasräumen nach außen und zur Gewährleistung einer möglichst ganzflächigen Kontaktierung wird die Brennstoffzelle bzw. der Brennstoffzellenstapel mit einer Verpressungseinrichtung mechanisch verpresst. Eine solche Vorrichtung wird in US 6,057,053 beschrieben.

In der Praxis treten in Brennstoffzellen sehr hohe, flächenspezifische Ströme bis hin zu mehreren Ampère/cm2 auf. Daher müssen die Ohmschen Widerstände der Komponenten in der Brennstoffzelle möglichst klein gehalten werden, so dass ein möglichst kleiner Ohmscher Leistungsverlust nach

$$PVerlust = ROhm\square\ I^2$$

auftritt. Die Verlustleistung hängt dabei über die spezifische Leitfähigkeit der einzelnen Komponenten auch mit der spezifischen Stromdichte zusammen.

Den mikroskopischen Aufbau einer herkömmlichen Grenzfläche zwischen Gasdiffusionsschicht und Bipolarplatte bei einer Polymerelektrolyt-Brennstoffzelle gemäß dem Stand der Technik zeigt Fig. 5 stark schematisiert. Eine einzelne Kohlefaser 101 - im Schnitt gezeichnet - liegt auf einer technischen Oberfläche 102 einer Bipolarplatte 103 auf und weist in Verbindung mit dem mechanischen Verpressungsdruck des Stapels, symbolisch in Fig. 5 durch Pfeile angedeutet, und der Elastizität der Faser und des Materials der Bipolarplatte 103 eine Auflagefläche 104 auf, durch die der elektrische Strom I hindurchgeleitet werden muss. Im Falle einer Anordnung mit konventionellen Bipolarplatten 103 und Kohlefasern 101 beträgt die Projektion 104' der Auflagefläche 104 bezogen auf den Durchmesser der Kohlefaser 101 etwa 5-20%, oder auch mehr, je nach Oberflächenrauhigkeit der Bipolarplatte 103. Die Verlustleistung bzw. der Ohmsche Widerstand an dieser Grenzfläche ist nach dem Ohmschen Gesetz umgekehrt proportional zur Auflagefläche 104, so dass kleine Auflageflächen 104 elektrisch hochleitfähige Materialien erfordern, die teilweise hohe Kosten verursachen.

$$ROhm \sim 1 / Auflagefläche$$

Die Funktion einer Direktmethanol-Brennstoffzelle ist vergleichbar, jedoch ist der Brennstoff nicht gasförmig, sondern Methanol bzw. ein Methanol-Wasser-Gemisch. Als Oxidationsmittel wird Sauerstoff, insbesondere LuftSauerstoff, verwendet, wobei and er Anode Methanol zu Kohlendioxyd oxidiert und an der Kathode molekularer Sauerstoff zunächst mittels eines auf die Kathode aufgebrachten Katalysators, z.B. Platin, absorbiert und anschließend zu Wasser reduziert wird.

$$CH_3OH + H_2O \rightarrow CO_2 + 2\ H_2O + 6\ H^+ + 6\ e^-$$

$$1,5\ O_2 \rightarrow 3\ O(ads)$$

$$3\ O(ads) + 6\ H^+ + 6\ e^- \rightarrow 3\ H_2O$$

Hieraus resultiert die Gesamtreaktion:

$$CH_3OH + 1,5\ O_2 \rightarrow CO_2 + 2\ H_2O$$

Auch derartige Direktmethanol-Brennstoffzellen haben die o.g. Nachteile.

Aufgabe der Erfindung ist es, eine Brennstoffzelle zur Verfügung zu stellen, bei der die Verlustleistung, die beim Übergang elektrischen Stromes von der Gasdiffusions-Elektrode bzw. Diffusionszone aus beispielsweise einem Kohlefaserfilz oder einem Kohlefaserpapier zu den Bipolar- bzw. Stromkollektorplatten auftritt, minimiert ist.

Diese Aufgabe wird gelöst durch eine Brennstoffzelle mit den Merkmalen des Anspruches 1 sowie durch ein Verfahren zur Herstellung einer Brennstoffzelle mit den Merkmalen des Anspruches 10. Vorteilhafte Ausgestaltungen sind Gegenstand der Unteransprüche.

Die erfindungsgemäße Brennstoffzelle, insbesondere eine Polymerelektrolyt- oder Direktmethanol-Brennstoffzelle, besteht im wesentlichen anodenseitig und/oder kathodenseitig aus mindestens je einer Gasdiffusions-Elektrode mit einer Elektrodendiffusionszone und mindestens je einer stromabnehmenden Komponente, beispielsweise einer Bipolarplatte oder einer Monopolarplatte, mit einer plastisch und/oder elastisch verformbaren Oberfläche, beispielsweise aus Blei, die zur Ausbildung einer elektrischen Kontaktfläche im Bereich von 0 bis 99% oder mehr bezogen auf den Durchmesser der aufliegenden Mikrostruktur, beispielsweise einer Kohlefaser mit kreisrundem Querschnitt, und damit zu einer deutlichen Absenkung des elektrischen Widerstandes führt. Diese plastischen Eigenschaften werden vorzugsweise durch Verwendung eines Werkstoffes mit niedriger Druckfestigkeit, typischerweise sigmaz kleiner 50 MPa, erzielt.

In einer vorteilhaften Ausführung wird eine Bipolarplatte mit hoher Druckfestigkeit mit einer plastisch leicht verformbaren Beschichtung versehen, beispielsweise eine Titan-Bipolarplatte mit einer BleiBeschichtung.

In einer weiteren vorteilhaften Ausführung wird ein Filz mit plastisch verformbarer Oberfläche als Gasdiffusions-Elektrode verwendet, dessen Verformungseigenschaften denen der o.g. stromabnehmenden Komponente entsprechen, so dass die Auflagefläche, d.h. die elektrische Kontaktfläche, vergrößert werden kann.

Vorzugsweise erfolgt die Verformung in Verbindung mit der Mikrostruktur der jeweils benachbarten Komponente (Bipolarplatte oder Gasdiffusionszone) durch die Einwirkung einer mechanischen Flächenlast, beispielsweise in Verbindung mit dem Verpressdruck der Brennstoffzelle. Die mechanische Flächenlast beträgt hierbei vorzugsweise zwischen 10 mbar und 10000 bar.

Vorzugsweise ist mindestens eine Komponente, d.h. Bipolarplatte oder Gasdiffusionszone - mit mindestens einer unter Montage- bzw. Betriebsbediungungen der Brennstoffzelle plastisch verformbaren Schicht aus einem Werkstoff mit niedriger Druckfestigkeit, typischerweise mit sigmaz kleiner 50 MPa, versehen. Im Falle eines mehrschichtigen Aufbaus kann als oberste Schicht eine Deckschicht verwendet werden, die beispielsweise die darunter liegenden Schichten und ggf. die entsprechende, beschichtete Komponente selbst vor Korrosion schützt. Eine weiter unten liegende Schicht kann beispielsweise auch die Haftung der darüber liegenden Schicht verbessern. Vorzugsweise ist die Bipolarplatte, welche die stromabnehmende Komponente bildet, beschichtet, jedoch können auch Kohlefasern, welche die Gasdiffusionszone der MEA bilden, zumindest bereichsweise beschichtet sein. Natürlich ist auch eine Kombination aus einer plastisch verformbaren Beschichtung der Bipolarplatten und einer plastisch verformbaren Beschichtung der Kohlefasern bzw. Gasdiffusionszone möglich.

Vorzugsweise handelt es sich bei der Schicht bzw. bei mindestens einer der Schichten um eine kristalline oder amorphe Schicht.

Vorzugsweise ist als Gasdiffusions-Elektrode ein gasdurchlässiges, poröses oder faseriges Material vorgesehen, insbesondere Kohlefasern, beispielsweise auch in der Form von Kohlefaserfilz oder Kohlefaserpapier.

Typische Durchmesser für solche Einzelfasern liegen zwischen 1 μm und 50 μm, insbesondere zwischen 1 μm und 20 μm, im unverformten Zustand, d.h. vor einer plastischen/elastischen Verformung.

Durch die erfindungsgemäßen Komponenten der Brennstoffzelle werden erheblich geringere Ohmsche Widerstände an der Grenzfläche Bipolarplatte / MEA erzielt, die zu einer erheblichen Effizienzsteigerung der Brennstoffzelle beitragen können.

Im folgenden wird die Erfindung anhand mehrerer Ausführungsbeispiele unter Bezugnahme auf die Zeichnung im einzelnen erläutert. In der Zeichnung zeigen:

Fig. 1    eine schematische Darstellung eines Schnittes durch eine Polymerelektrolyt - Brennstoffzelle gemäß einem ersten Ausführungsbeispiel,

Fig. 2      eine schematische Darstellung eines Schnittes durch eine Polymerelektrolyt - Brennstoffzelle gemäß einem zweiten Ausführungsbeispiel,

Fig. 3      eine schematische Darstellung eines Schnittes durch eine Polymerelektrolyt - Brennstoffzelle gemäß einem dritten Ausführungsbeispiel,

Fig. 4      eine schematische Darstellung eines Schnittes durch eine Polymerelektrolyt - Brennstoffzelle gemäß einem vierten Ausführungsbeispiel und

Fig. 5      eine schematische Darstellung eines Schnittes durch eine Polymerelektrolyt - Brennstoffzelle gemäß dem Stand der Technik.

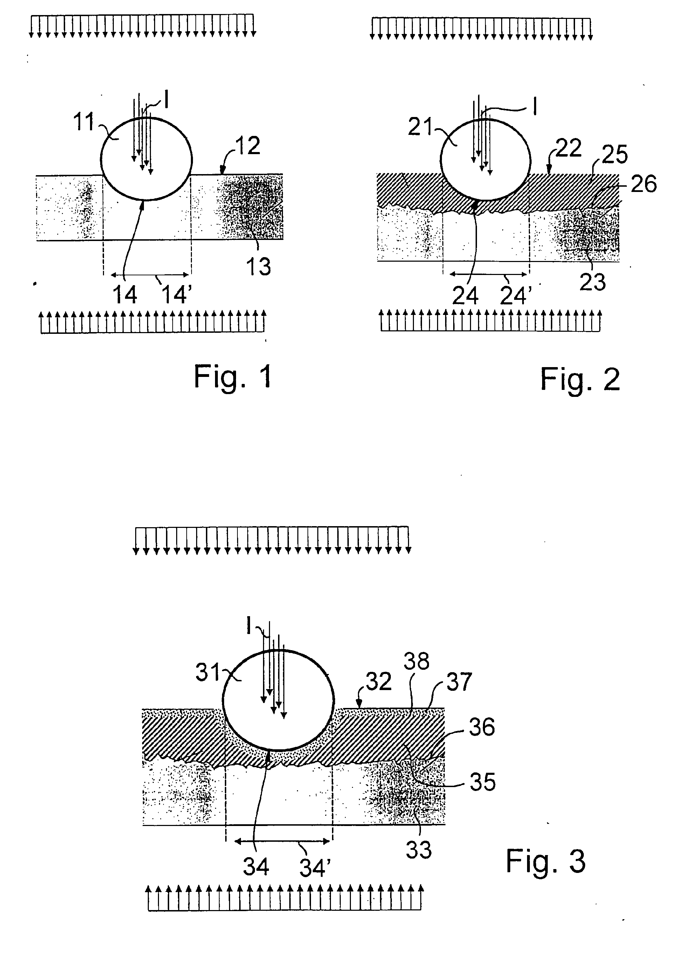

**Fig. 1** zeigt stark schematisiert den mikroskopischen Aufbau einer erfindungsgemäßen Polymerelektrolyt-Brennstoffzelle. Eine Kohlefaser 11, die Teil eines nicht näher dargestellten, eine Gasdiffusionselektrode bildenden Kohlefaserfilzes ist und welche im Ausgangszustand einen im wesentlichen kreisförmigen Querschnitt aufweist, liegt auf einer Oberfläche 12 einer Bipolarplatte 13 auf, gemäß dem ersten Ausführungsbeispiel einer Bipolarplatte 13 aus Blei, und weist in Verbindung mit dem mechanischen Verpressungsdruck des Stapels, symbolisch durch Pfeile angedeutet, und der Elastizität der Kohlefaser 11 und des Materials der Bipolarplatte 13 eine Auflagefläche 14 auf, durch die der elektrische Strom I hindurchgeleitet wird. Hierbei entspricht die Projektion 14' Auflagefläche 14 auf eine entsprechend der ursprünglichen Oberfläche 12 verlaufenden Ebene annähernd dem Querschnitt der Kohlefaser 11.

Das im folgenden unter Bezugnahme auf **Fig. 2** beschriebene zweite Ausführungsbeispiel stimmt teilweise mit dem ersten Ausführungsbeispiel überein, so dass gleiche und gleichwirkende Bauteile mit um 10 erhöhten Bezugszeichen versehen sind. Hierbei wird die Oberfläche 22 der Bipolarplatte 23 durch eine Schicht 25 gebildet, die auf der Fläche 26 des Grundkörpers der Bipolarplatte 23 angeordnet ist. Diese Schicht 25 kann beispielsweise durch ein galvanisches oder ein PVD-Verfahren auf den Grundkörper der Bipolarplatte 23 aufgetragen werden und wird durch den Beschichtungsvorgang zum integralen Bestandteil der Bipolarplatte 23. Bei der Schicht 25 handelt es sich gemäß dem zweiten Ausführungsbeispiel um eine Bleischicht, beim Grundkörper der Bipolarplatte 23 um eine Hartgraphit-Bipolarplatte. Die Kohlefaser 21 ist infolge des Verpressungsdruck des Stapels teilweise in die plastisch oder elastisch verformbare, im Ausgangszustand im wesentlichen ebene Oberfläche 22 eingedrückt, so dass die Projektion 24' der Auflagefläche 24 auf eine entsprechend der ursprünglichen Oberfläche 22 verlaufenden Ebene annähernd dem Querschnitt der Kohlefaser 21 entspricht. Der Durchmesser der Kohlefaser 21 im unbelasteten Ursprungszustand beträgt typischerweise zwischen 1 μm und 20 μm.

Das im folgenden unter Bezugnahme auf **Fig. 3** beschriebene dritte Ausführungsbeispiel stimmt teilweise mit dem ersten Ausführungsbeispiel überein, so dass gleiche und gleichwirkende Bauteile mit um 20 erhöhten Bezugszeichen versehen sind. Hierbei wird die Oberfläche 32 der Bipolarplatte 33 durch eine zweite Schicht 37 gebildet, die auf der Fläche 38 der Schicht 35 angeordnet ist, welche ihrerseits auf der Fläche 36 des Grundkörpers der Bipolarplatte 33 angeordnet ist. Bei der zweiten Schicht 37, die als Deckschicht dient, handelt es sich um eine Schicht aus Gold. Hierbei dient diese Schicht 37 dem Schutz der ersten Schicht 35 und ggf. auch des Grundkörpers der Bipolarplatte 33 vor der Brennstoffzellenatmosphäre, insbesondere in Hinblick auf Korrosion. Auch gemäß diesem Ausführungsbeispiel entspricht die Projektion 34' der Auflagefläche 34 auf eine entsprechend der ursprünglichen Oberfläche 32 verlaufenden Ebene etwa dem Querschnitt der Kohlefaser 31.

Das im folgenden unter Bezugnahme auf **Fig. 4** beschriebene vierte Ausführungsbeispiel stimmt teilweise mit dem ersten Ausführungsbeispiel überein, so dass gleiche und gleichwirkende Bauteile mit um 30 erhöhten Bezugszeichen versehen sind. Hierbei sind Kohlefasern 41 der Gasdiffusions-Elektrode mit einer Schicht 49 versehen, die entsprechende Verformungseigenschaften aufweist, so dass sie sich in ihrer Form der Oberfläche 42 der Bipolarplatte 43 bei entsprechendem mechanischem Verpressdruck im wesentlichen anpasst. Hierbei sind Auflageflächen 44 der Kohlefaser 41 inklusive der Schicht 49 möglich, deren Projektion 44' auf eine entsprechend der ursprünglichen Oberfläche 42 verlaufende Ebene den Durchmesser der (unbeschichteten) Kohelfaser 41 deutlich übersteigen.

Gemäß einem nicht dargestellten weiteren Ausführungsbeispiel sind die Beschichtung der Bipolarplatte gemäß dem zweiten .Ausführungsbeispiel und die Beschichtung der Kohlefasern gemäß dem vierten Ausführungsbeispiel kombiniert. Dies kann bei entsprechender Verformung und geeigneter Materialpaarung der Beschichtungen zu einer optimierten Auflagefläche und somit zu einem geringen Ohmschen Widerstand führen.

In einer weiteren vorteilhaften Ausführung wird ein plastisch verformbarer Filz verwendet, der die Bipolarplatte direkt kontaktieren soll.

Bei sämtlichen Ausführungsbeispielen erfolgt eine plastische und/oder elastische Verformung im wesentlichen auf Grund des Verpressungsdruck des Stapels. Jedoch muss die Verformung nicht ursächlich durch die Verpressung des Stapels sondern kann auch vor dem abschließenden Zusammenbau des Stapels erfolgen. Des weiteren ist die Oberfläche, insbesondere die Beschichtung, gemäß den ersten drei Ausführungsbeispielen physikalischer Bestandteil der Bipolarplatte, sowie im vierten Ausführungsbeispiel physikalischer Bestandteil der Kohlefaser, also der Gasdiffusions-Elektrode.

Sämtliche o.g. Ausführungsbeispiele sind auch in einer Direktmethanol-Brennstoffzelle entsprechend ausführbar.

## Bezugszeichenliste

11, 21, 31, 41, 101 Kohlefaser
12, 22, 32, 42, 102 Oberfläche
13, 23, 33, 43, 103 Bipolarplatte
14, 24, 34, 44, 104 Auflagefläche
14', 24', 34', 44', 104' Projektion
25, 35 Schicht
26, 36 Fläche
37 zweite Schicht
38 Fläche
49 Schicht
I elektrischer Strom

## Patentansprüche

1. Brennstoffzelle, insbesondere Polymerelektrolyt- oder Direktmethanol-Brennstoffzelle, mit anodenseitig und/oder kathodenseitig mindestens je Einer Gasdiffusions-Elektrode mit einer Elektrodendiffusionszone und Mindestens je einer stromabnehmenden Komponente, **dadurch gekennzeichnet, dass** der elektrische Widerstand der mikroskopischen Kontaktfläche (14; 24; 34; 44) 'zwischen der Elektrodendiffusionszone (11; 21; 31; 41) und der Oberfläche (12; 22; 32; 42) der strom abnehmenden Komponente durch Vergrößerung der Kontaktfläche (14; 24; 34; 44) infolge einer plastischen Verformung verringert ist.

2. Brennstoffzelle nach Anspruch 1, **dadurch gekennzeichnet, dass** die plastische Verformung in einem Bereich der Elektrodendiffusionszone (11; 21; 31; 41) und/oder einem Bereich der Kontaktfläche (14; 24; 34; 44) erfolgt.

3. Brennstoffzelle nach Anspruch 1 oder 2, **dadurch gekennzeichnet, dass** die plastische Verformung durch die Einwirkung einer mechanischen Flächenlast erfolgt.

4. Brennstoffzelle nach Anspruch 3, **dadurch gekennzeichnet, dass** die mechanischen Flächenlast zwischen 10 mbar und 10000 bar beträgt.

5. Brennstoffzelle nach einem der vorstehenden Ansprüche, **dadurch gekennzeichnet, dass** die stromabnehmende Komponente (13; 23; 33; 43) und/oder die Gasdiffusions-Elektrode (11; 21; 31; 41) mit mindestens einer Schicht (25; 35, 37; 49) versehen ist.

6. Brennstoffzelle nach Anspruch 5, **dadurch gekennzeichnet, dass** mindestens eine Schicht (25; 35, 37; 49) eine kristalline oder amorphe Schicht ist.

7. Brennstoffzelle nach Anspruch 6, **dadurch gekennzeichnet, dass** mindestens eine Schicht (37) als Deckschicht vorgesehen ist.

8. Brennstoffzelle nach einem der vorstehenden Ansprüche, **dadurch gekennzeichnet, dass** als Gasdiffusions-Elektrode ein poröses oder faseriges Material vorgesehen ist.

9. Brennstoffzelle nach Anspruch 8, **dadurch gekennzeichnet, dass** das poröse oder faserige Material Kohlefasern (11; 21; 31; 41) aufweist.

10. Brennstoffzelle nach Anspruch 8 oder 9, **dadurch gekennzeichnet, dass** der Durchmesser des faserigen Materials im unverformten Zustand zwischen 1 µm und 50 µm beträgt.

11. Verfahren zur Herstellung einer Brennstoffzelle, insbesondere einer Polymerelektrolyt- oder Direktmethanol-Brennstoffzelle, insbesondere nach einem der vorstehenden Ansprüche, **dadurch gekennzeichnet, dass** bei der Verspannung der Brennstoffzelle eine plastische und/oder elastische Verformung einer Oberfläche (12; 22; 32), insbesondere einer Schicht (25; 35, 37; 49) zur Erhöhung einer elektrisch wirksamen Anlagefläche (14; 24; 34; 44) erfolgt.

Fig. 1

Fig. 2

Fig. 3